# EUROPEAN PATENT APPLICATION

(11) **EP 1 912 023 A1**
(43) Date of publication of application: **16.04.2008**
(21) Application number: 06781521.7
(22) Date of filing: 25.07.2006
(51) Int. Cl.: F24C 1/00

(54) **HEATING COOKER**

(30) Priority: 29.07.2005 JP 2005220557
(71) Applicant: Sharp Kabushiki Kaisha, Osaka-shi, Osaka 545-8522 (JP)
(72) Inventor: YAMAMOTO, Yoshikazu, Osaka (JP); NISHIJIMA, Masahiro, Nara (JP); NAKAMURA, Tatsuhiko, Osaka-shi, Osaka-fu (JP)
(74) Representative: Brown, Kenneth Richard
(86) International application number: PCT/JP2006/314609
(87) International publication number: WO 2007/013420

(57) **Abstract**

A cover portion (96) for covering an opening of a tank body serving as a water tank is provided with a water receiving section (97) formed of a recess for temporary reception of supplied water, and the water receiving section (97) is provided with mesh-like filters (93a, 93b). Thus, scale or other impurities contained in discharge water derived from a pot of a steam generator and discharged from a drain valve are filtrated by the filters (93a, 93b), by which the discharge water from the pot is recycled as water for steam generation without using any special purification system. Therefore, the number of times of water supply to the water tank can be reduced without using any special purification system.

## Description

### TECHNICAL FIELD

The present invention relates to a heating cooker for heating and cooking foods by using steam.

### BACKGROUND ART

As a heating cooker for heating and cooking an object to be cooked such as foods by using steam, there has conventionally been provided a steam cooker disclosed in JP H10-110903 A (Patent Document 1). In this steam cooker, as a plunger pump starts, water in a liquid container is dripped to an exothermic body through an inlet of a steam generating means by the plunger pump. Then, the exothermic body, when wetted with water, is put into an exothermic state by an exciting coil so that dripped water is heated, formed into steam, and flows out through an outlet so as to be sent to a cooking chamber. In the cooking chamber, heat cooking on the object to be cooked is carried out with the steam. Meanwhile, water that has not evaporated in the steam generating means is discharged outside the steam cooker through a drain pipe.

However, the steam cooker disclosed in Patent Document 1 has the following issues. That is, the water in the liquid container is fed to the steam generating means, and therefore decreases. For this reason, that the liquid container empty of the water is detected by a water level detection circuit, and then the steam generating means is stopped or water supply to the liquid container is prompted.

In such a case as shown above, water that has not evaporated in the steam generating means is discharged outside the steam cooker through the drain pipe. Accordingly, water contained in the liquid container only decreases more and more, giving rise to a need for frequently stopping the steam generating means or supplying water to the liquid container.

Accordingly, recycling the water that has not evaporated in the steam generating means makes it possible to reduce the decreasing degree of water in the liquid container, and to thereby reduce the number of times of stopping the steam generating means or of supplying water to the liquid container. However, since the water that has not evaporated in the steam generating means contains scale or other impurities, the recycling involves a need for once receiving the water by a tank other than the liquid container and then pass the water received by the tank through a purification system, which would cause the device to be complicated as a problem.

### SUMMARY OF THE INVENTION

Accordingly, an object of the present invention is to provide a heating cooker in which the number of times of water supply to a water tank for storing steam-use water can be reduced without using any special purification system.

In order to achieve the above object, there is provided a heating cooker, comprising:
a steam generator for generating steam;
a heating chamber for heating an object to be heated by steam supplied from the steam generator;
a water tank for storing water which is to be supplied to the steam generator to generate steam,
the steam generator including a pot to which water is supplied, and a heater placed within the pot,
the water tank including a tank body having an opening in its top face, and a cover portion removably provided in the tank body to cover the opening of the tank body; and
a discharge pipe for discharging water in the pot to the water tank, wherein
the cover portion includes a recess to which water derived from the discharge pipe is supplied, and a filter provided at the recess for removing impurities of the water derived from the discharge pipe.

In this heating cooker, the water in the pot of the steam generator discharged via the discharge pipe has its impurities removed by the filter provided at the recess of the cover portion in the water tank, and then returned to the tank body of the water tank. Accordingly, discharge water from the pot, from which scale or other impurities have been removed, can be recycled as water for steam generation as it is, so that the number of times of water supply to the water tank can be reduced without using any special purification system.

Moreover, in water supply to the water tank, removing the cover portion that covers the opening of the tank body allows the water supply to be done through the opening with good workability.

In one embodiment of the invention, the cover portion further includes another cover which is provided so as to be fittable to and removable from the recess to cover the recess and which has a water supply port to which water derived from the discharge pipe is to be supplied.

In this case, the recess in the cover portion is removably covered with the cover having the water supply port. Therefore, undesired clogging of the filter caused by dust or the like in the air entered into the recess can be prevented.

In one embodiment of the invention, the filter is provided at a bottom face in the recess of the cover portion.

In this embodiment, the filter is provided at the bottom face of the recess and therefore positioned near the liquid surface in the tank body. Therefore, when the user supplies water to the tank body to a fullness of water, the filter is wetted so that the water from the water supply port has its surface tension lowered on the wetted filter, thus being allowed to pass through the filter promptly.

In one embodiment of the invention, the filter is provided with a rib in contact with at least the bottom face of the filter.

In this embodiment, a rib is provided so as to be in contact with the bottom face of the filter. Therefore, even if the filter is in a dry state, the water surface tension lowers by virtue of the presence of the member along which water is conducted on the lower side of the filter. As a result, the water derived from the water supply port is allowed to pass through the filter promptly along the rib.

In one embodiment of the invention, the filter is integrally molded with the rib.

In this embodiment, since the filter is integrally molded with the rib, the filter is sandwiched by the rib from upper and lower two sides. Therefore, the filter is reinforced by the rib so as to be strong and less liable to breakage.

In one embodiment of the invention, the recess includes a first recess at which the filter is to be provided, and a second recess shallower than the first recess, and
the water supply port is provided at a position confronting the second recess.

In this embodiment, the water supply port is provided at a position confronting the second recess that is shallower than the first recess, in which the filter is provided. Therefore, even if a wave has occurred due to wavers of the water in the tank body when the user takes out the water tank, the wave is blocked by the step gap between the first recess and the second recess, thus prevented from flying out through the water supply port.

In one embodiment of the invention, the recess includes a sloped portion adjoining the first recess and the second recess.

In this embodiment, the water supplied from the water supply port has a dynamic pressure generated by its flowing down from the second recess toward the first recess along the sloped portion, the dynamic pressure being applied to the filter so that the filter becomes easily wettable. Therefore, the water derived from the water supply port can be passed through the filter promptly.

In one embodiment of the invention, the first recess is placed closer to a center of the cover portion than the second recess.

In this embodiment, the second recess, in which the water supply port is provided, is located on the side closer to the edge of the cover portion than the first recess. Therefore, the length of the discharge pipe for supplying the water supply port with water derived from the pot can be shortened.

As apparent from the above, in this heating cooker, the water in the pot of the steam generator discharged via the discharge pipe has its impurities removed by the filter provided at the recess of the cover portion in the water tank, and then returned to the tank body of the water tank. Accordingly, discharge water from the pot, from which scale or other impurities have been removed, can be recycled as water for steam generation as it is. Therefore, the number of times of water supply to the water tank can be reduced without using any special purification system.

Moreover, in water supply to the water tank, removing the cover portion that covers the opening of the tank body allows the water supply to be done through the opening with good workability.

### BRIEF DESCRIPTION OF THE DRAWINGS

Fig. 1 is a perspective view showing an external appearance of a heating cooker according to the present invention;
Fig. 2 is a perspective view showing an external appearance of the heating cooker shown in Fig. 1 with its door opened;
Fig. 3 is a schematic constructional view of the heating cooker shown in Fig. 1;
Fig. 4 is a control block diagram of the heating cooker shown in Fig. 1;
Fig. 5 is a view showing a water supply unit;
Fig. 6A is a plan view of the water tank in Fig. 3;
Fig. 6B is a front view of the water tank in Fig. 3;
Fig. 6C is a side view of the water tank in Fig. 3;
Fig. 6D is a sectional view taken along the line A-A' in Fig. 6A;
Fig. 7A is a plan view of a lid portion in a state in which the lid member in Fig. 6A has been removed;
Fig. 7B is a front view of the lid portion in a state in which the lid member has been removed;
Fig. 7C is a bottom view of the lid portion in a state in which the lid member has been removed;
Fig. 7D is a sectional view taken along the line B-B' in Fig. 7A;
Fig. 8 is an enlarged sectional view taken along the line C-C' in Fig. 7A.

### DETAILED DESCRIPTION OF THE INVENTION

Hereinbelow, the present invention will be described in detail by way of an embodiment thereof illustrated in the accompanying drawings.

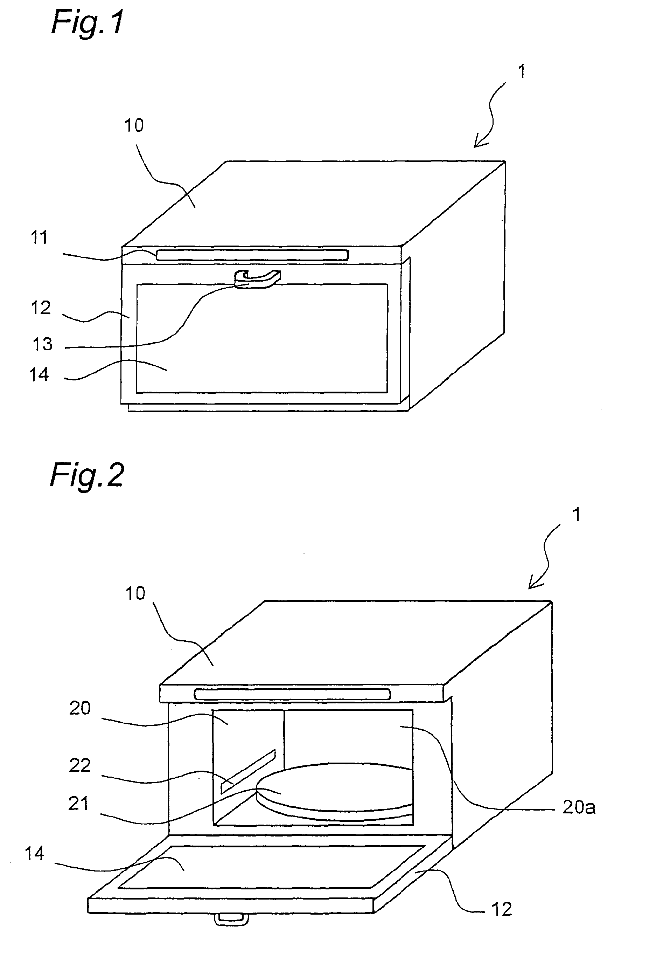

Fig. 1 is a perspective view showing an external appearance of a heating cooker according to this embodiment. The heating cooker 1 is composed roughly of an operation panel 11 provided at an upper front of a rectangular parallelepiped cabinet 10, and a door 12 provided below the operation panel 11 in the front face of the cabinet 10 and being pivotable about a side on the lower end side. Further, a handle 13 is provided at an upper portion of the door 12, and a window 14 made of a heat-resistant glass is fitted to the door 12.

Fig. 2 is a perspective view showing an external appearance of the heating cooker 1 with its door 12 opened. A rectangular parallelepiped heating chamber 20 is provided in the cabinet 10. The heating chamber 20 has an opening 20a on the front side facing the door 12, and a side face, a bottom face and a top face of the heating chamber 20 are each formed of a stainless steel plate. Moreover, a side of the door 12 facing the heating chamber 20 is formed of a stainless steel plate. A heat insulating material (not shown) is placed around the heating chamber 20 and inside the door 12 so that interior and exterior of the heating chamber 20 are insulated from each other.

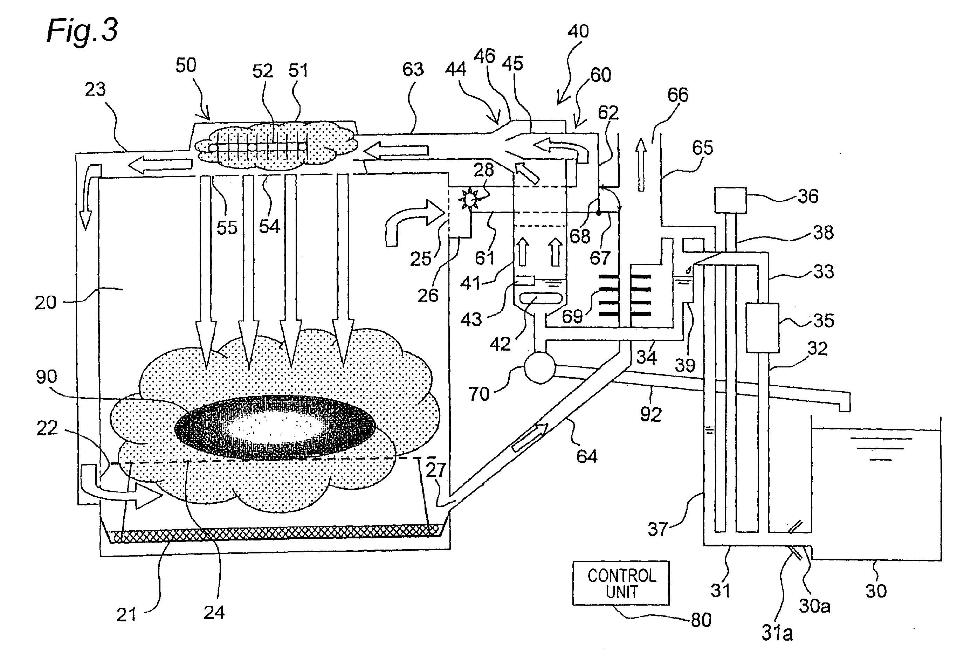

Moreover, a catch pan 21 made of stainless steel is placed on the bottom surface of the heating chamber 20, and a rack 24 (see Fig. 3) made of stainless steel wires on which an object to be cooked is to be placed is put on the catch pan 21. Further, side-face steam outlets 22 (only one is seen in Fig. 2) each extending roughly horizontal and formed in a roughly rectangular shape are provided at lower portions in both side faces of the heating chamber 20.

Fig. 3 is a schematic constructional view showing a basic construction of the heating cooker 1. As shown in Fig. 3, the heating cooker 1 includes the heating chamber 20, a water tank 30 for storing water for use as steam, a steam generator 40 for evaporating water supplied from the water tank 30 to generate steam, a steam temperature-raising device 50 for heating steam derived from the steam generator 40, and a control unit 80 for controlling operation of the steam generator 40, the steam temperature-raising device 50 and the like.

The grid-like rack 24 is put on the catch pan 21 placed in the heating chamber 20, and an object to be cooked 90 is placed at a roughly center of the rack 24.

Also, a connecting portion 30a provided at a lower side of the water tank 30 is connected to a funnel-like receiving port 31a provided at one end of a first water supply pipe 31. The intake side of a pump 35 is connected to an end portion of a second water supply pipe 32 branched from the first water supply pipe 31 and extending upward, and one end of a third water supply pipe 33 is connected to the discharge side of the pump 35. Further, a water-tank water level sensor 36 is provided at an upper end of a water-level-sensor pipe 38 branched from the first water supply pipe 31 and extending upward. Moreover, a later-described exhaust gas duct 65 is connected at an upper end of an air releasing pipe 37 branched from the first water supply pipe 31 and extending upward.

Then, the third water supply pipe 33 is L-shaped so as to be bent roughly horizontally from a vertically-positioned portion, and an auxiliary tank 39 is connected to the other end of the third water supply pipe 33. One end of a fourth water supply pipe 34 is connected to a lower end of the auxiliary tank, and the other end of the fourth water supply pipe 34 is connected to a lower end of the steam generator 40. Also, one end of a drain valve 70 is connected to the lower side of the steam generator 40 lower than its connecting point to the fourth water supply pipe 34. Then, one end of a bypass pipe 92 is connected to the other end of the drain valve 70, and the other end of the bypass pipe 92 is located at a site where the water tank 30 is placed. It is noted that the upper side of the auxiliary tank 39 communicates with the air via the air releasing pipe 37 and the exhaust gas duct 65.

When the water tank 30 is connected to the receiving port 31a of the first water supply pipe 31, water in the air releasing pipe 37 rises until its water level becomes flush with that of the water tank 30. In this case, the water-level-sensor pipe 38, which connects with the water-tank water level sensor 36, has its end sealed so that its water level does not increase, whereas the pressure in a sealed space of the water-level-sensor pipe 38 increases from the atmospheric pressure responsive to the water level of the water tank 30. This pressure change is detected by a pressure detecting element (not shown) in the water-tank water level sensor 36, by which the water level within the water tank 30 is detected. Although the air releasing pipe 37 is unnecessary for water level measurement with the pump 35 being standstill, the air releasing pipe 37 having an open end is provided in order to prevent any detection inaccuracy of the water level of the water tank 30 due to the suction pressure of the pump 35 acting on the pressure detecting element.

The steam generator 40 has a pot 41 to which the other end of the fourth water supply pipe 34 is connected on the lower side, a steam generator heater 42 placed near the bottom face within the pot 41, a water level sensor 43 placed near an upper side of the steam generator heater 42 within the pot 41, and a steam suction ejector 44 fitted on the upper side of the pot 41. Then, a fan casing 26 is placed outside an intake opening 25 provided at an upper portion of a side face of the heating chamber 20. By a blower fan 28 placed within the fan casing 26, steam in the heating chamber 20 is sucked in through the intake opening 25 and fed toward the inlet side of the steam suction ejector 44 of the steam generator 40 via a first pipe 61 and a second pipe 62. The first pipe 61, which is positioned roughly horizontal, has one end connected to the fan casing 26. Also, the second pipe 62 being positioned roughly vertical, its one end is connected to the other end of the first pipe 61, while the other end of the second pipe 62 is connected to the inlet side of an inner nozzle 45 of the steam suction ejector 44.

The steam suction ejector 44 has an outer nozzle 46 covering the outer side of the inner nozzle 45, the discharge side of the inner nozzle 45 communicates with the internal space of the pot 41. Then, the discharge side of the outer nozzle 46 of the steam suction ejector 44 is connected to one end of a third pipe 63, and the steam temperature-raising device 50 is connected to the other end of the third pipe 63.

The fan casing 26, the first pipe 61, the second pipe 62, the steam suction ejector 44, the third pipe 63 and the steam temperature-raising device 50 constitute an external circulation passage 60. Also, one end of a discharge passage 64 is connected to an exhaust gas outlet 27 provided on a lower side in a side face of the heating chamber 20, and the other end of the discharge passage 64 is connected to one end of the exhaust gas duct 65. An exhaust gas outlet 66 is provided at the other end of the exhaust gas duct 65. A radiator 69 is externally fitted on one side of the steam discharge passage 64 closer to the exhaust gas duct 65. Then, a connecting portion between the first pipe 61 and the second pipe 62 forming the external circulation passage 60 is connected to the exhaust gas duct 65 via an exhaust gas passage 67. On one side of the exhaust gas passage 67, on which the first, second pipes 61, 62 are connected to each other, a damper 68 for opening and closing the exhaust gas passage 67 is placed.

The steam temperature-raising device 50 has a tray-shaped case 51 placed at a ceiling-sided roughly center of the heating chamber 20 with its opening downward, and a steam superheater 52 placed within the tray-shaped case 51. A bottom face of the tray-shaped case 51 is formed of a metallic ceiling panel 54 provided at the ceiling face of the heating chamber 20. In the ceiling panel 54, a plurality of ceiling steam outlets 55 are formed. In this case, the ceiling panel 54 has upper and lower two sides finished in a dark color by coating or the like. The ceiling panel 54 may also be formed from a metal material that discolors into a dark color through repeated use or from a dark-colored ceramic molded product.

Further, steam supply passages 23 (only one is seen in Fig. 3) as superheated steam supply passages extending in an upper portion of the heating chamber 20 toward both right and left sides thereof are connected at their one end to the steam temperature-raising device 50. Then, the steam supply passages 23 extend downward along both side faces of the heating chamber 20 so as to be connected at their other ends to side steam outlets 22 provided at both side-face lower portions of the heating chamber 20, respectively.

Next, a control system of the heating cooker 1 is explained.

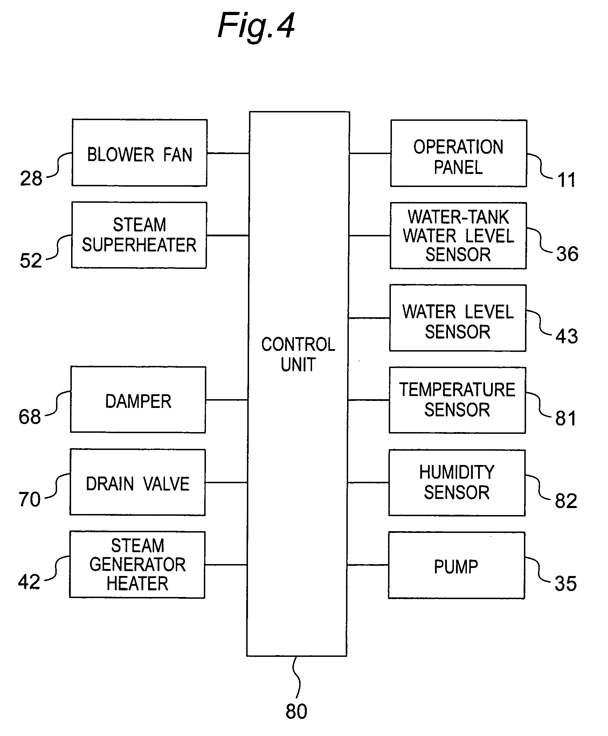

The control unit 80 is composed of a microcomputer, an input/output circuit and the like. As shown in Fig. 4, connected to the control unit 80 are the blower fan 28, the steam superheater 52, the damper 68, the drain valve 70, the steam generator heater 42, the operation panel 11, the water-tank water level sensor 36, the water level sensor 43, a temperature sensor 81 for detecting a temperature in the heating chamber 20 (shown in Fig. 3), a humidity sensor 82 for detecting a humidity in the heating chamber 20, and the pump 35. Then, based on detection signals received from the water-tank water level sensor 36, the water level sensor 43, the temperature sensor 81 and the humidity sensor 82, the control unit 80 controls the blower fan 28, the steam superheater 52, the damper 68, the drain valve 70, the steam generation heater 42, the operation panel 11 and the pump 35 according to a specified program.

Now, a basic operation of the heating cooker 1 constructed as described above is explained with reference to Figs. 3 and 4. When a power switch (not shown) in the operation panel 11 is pressed, the power is turned on, and heating cooking operation is started by operation of the operation panel 11. Then, the control unit 80 first closes the drain valve 70, and starts operation of the pump 35 with the exhaust gas passage 67 closed by the damper 68. By the pump 35, water is supplied from the water tank 30 into the pot 41 of the steam generator 40 via the first to fourth water supply pipes 31 - 34. Then, when it is detected by the water level sensor 43 that the water level in the pot 41 has reached a specified water level, the pump 35 is stopped to stop the water supply.

Next, the steam generator heater 42 is turned on so that a specified amount of water accumulated in the pot 41 is heated by the steam generator heater 42.

Next, simultaneously with the turn-on of the steam generator heater 42 or at the time when the temperature of the water in the pot 41 has reached a specified temperature, the blower fan 28 is turned on while the steam superheater 52 of the steam temperature-raising device 50 is turned on. Then, the blower fan 28 sucks in air (including steam) in the heating chamber 20 through the intake opening 25, blowing off the air (including steam) into the external circulation passage 60. In this case, since a centrifugal fan is used as the blower fan 28, higher pressure can be generated as compared with propeller fans. Further, rotating the centrifugal fan used as the blower fan 28 by a DC motor at high speed makes it possible to greatly enhance the flow velocity of the circulating air flow.

Next, when the water in the pot 41 of the steam generator 40 is boiled, saturated steam is generated, and the generated saturated steam is merged at the steam suction ejector 44 with the circulating air flow passing through the external circulation passage 60. The steam going out from the steam suction ejector 44 flows at high speed into the steam temperature-raising device 50 via the third pipe 63.

Then, the steam flowing into the steam temperature-raising device 50 is heated by the steam superheater 52 so as to be superheated steam of roughly 300°C (which differs depending on contents of the cooking). Part of the superheated steam is jetted out downward in the heating chamber 20 through the plurality of ceiling steam outlets 55 provided in the lower ceiling panel 54. Another part of the superheated steam is jetted out through the side steam outlets 22 in both side faces of the heating chamber 20 via the steam supply passages 23 provided on both right and left sides of the steam temperature-raising device 50.

Thus, superheated steam jetted from the ceiling side of the heating chamber 20 is vigorously supplied to the centrally placed object 90 side. Also, superheated steam jetted from the left and right lateral sides of the heating chamber 20, after having colliding with the catch pan 21, is supplied in a manner so as to wrap the object 90, while going up from the lower side of the object 90. As a result, in the heating chamber 20, there occurs a convective flow of steam that descends in central portion and ascends in its outer side. Then, the convective steam is sucked into the intake opening 25 in succession, repeating the circulation of passing through the external circulation passage 60 to return into the heating chamber 20 again.

In this manner, by forming a convective superheated steam flow in the heating chamber 20, it becomes possible to jet superheated steam, which is sent from the steam temperature-raising device 50, from the ceiling steam outlets 55 and the side steam outlets 22 so that it efficiently collides with the object 90 placed on the rack 24, while maintaining uniform temperature, humidity distribution in the heating chamber 20. Then, collision of superheated steam heats the object 90. At this time, superheated steam in contact with a surface of the object 90 heats the object 90 also by releasing latent heat that is generated when condensing on the surface of the object 90. Thus, a large quantity of heat of the superheated steam can uniformly be imparted to the entire surface of the object 90 surely and promptly. Therefore, uniform cooking that secures a good finish can be realized.

In the above heating cooking operation, an amount of steam in the heating chamber 20 increases with a lapse of time, and an excess amount of steam is discharged outside from the exhaust gas outlet 66 via the exhaust gas outlet 27, the discharge passage 64 and the exhaust gas duct 65. At this time, a radiator 69 provided on the discharge passage 64 cools steam passing the discharge passage 64 to condense, by which steam is prevented from being discharged to the outside as such. Water condensed by the radiator 69 within the discharge passage 64 runs down the discharge passage 64, is led to the catch pan 21, and disposed of together with water generated by cooking after completion of the cooking.

After completion of the cooking, the control unit 80 displays a message of completion of the cooking on the operation panel 11, and a sound is raised by a buzzer (not shown) provided on the operation panel 11. A user who has been noticed by those message and buzzer of the completion of the cooking opens the door 12. Then, the control unit 80, detecting the opening of the door 12 by means of a sensor (not shown), instantaneously opens the damper 68 of the exhaust gas passage 67. Thus, the first pipe 61 of the external circulation passage 60 communicates with the exhaust gas duct 65 via the exhaust gas passage 67, so that steam in the heating chamber 20 is discharged by the blower fan 28 from the exhaust gas outlet 66 via the intake opening 25, the first pipe 61, the exhaust gas passage 67 and the exhaust gas duct 65. The operation of the damper is the same even if the user opens the door 12 while cooking. Therefore, the user can safely take out the object 90 from the inside of the heating chamber 20 without being exposed to steam.

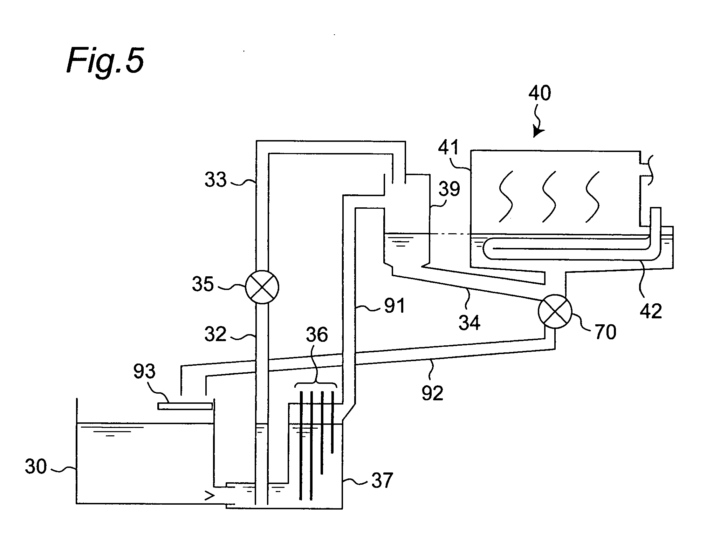

Fig. 5 shows a water supply unit ranging from the water tank 30 to the pot 41 of the steam generator 40 via the auxiliary tank 39. Although omitted in the basic construction shown in Fig. 3, an overflow tube 91 is provided so that water that has overflowed from the auxiliary tank 39 is returned to the air releasing pipe 37. Also, water in the water tank 30 is supplied to the pot 41 via the auxiliary tank 39. Furthermore, water in the pot 41 discharged from the drain valve 70 is returned to the water tank 30 via a filter 93 by the bypass pipe 92.

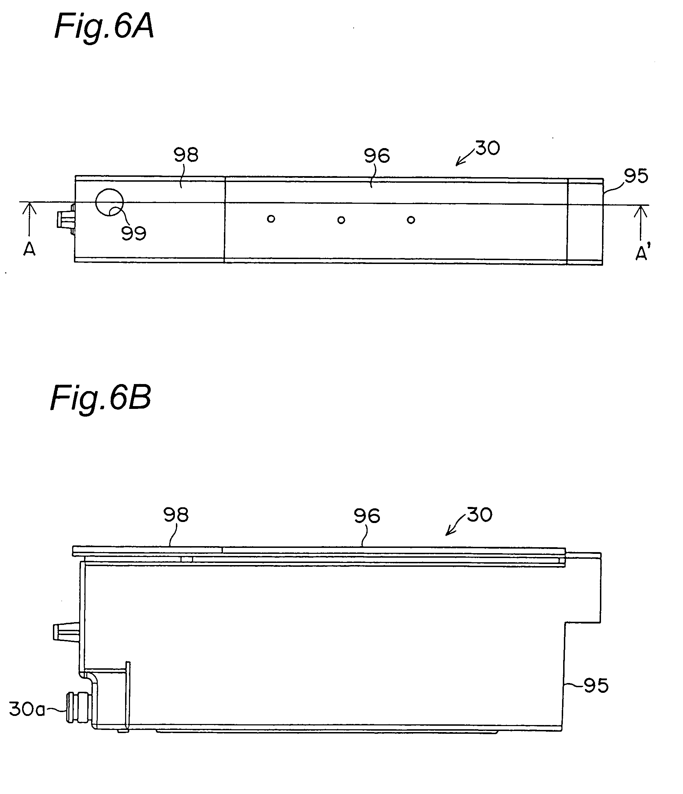

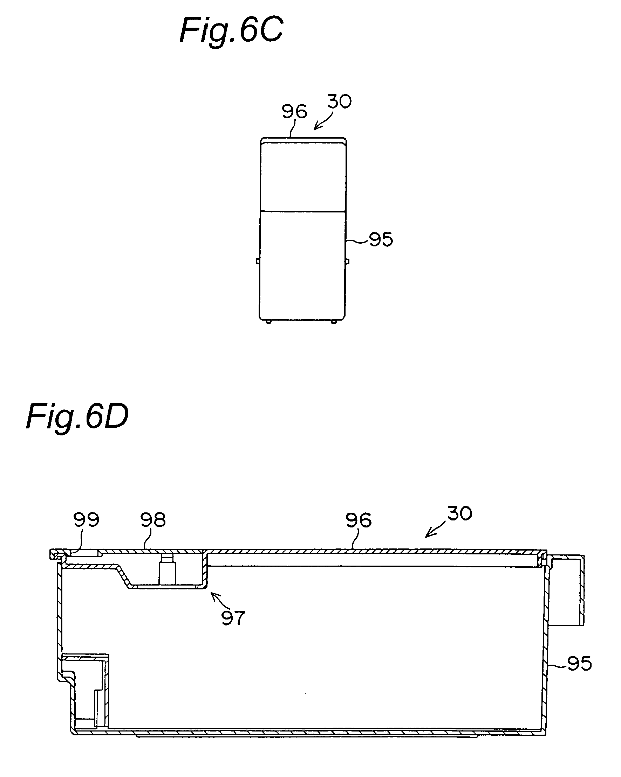

Figs. 6A through 6D are trihedral figures and a longitudinal sectional view of the water tank 30. Fig. 6A is a plan view, Fig. 6B is a front view and Fig. 6C is a side view. Fig. 6D is a sectional view taken along the line A - A' of Fig. 6A. The water tank 30 is composed roughly of a tank body 95 and a cover portion 96 for closing the opening of the top face in the tank body 95.

The tank body 95, formed into a longitudinally longer rectangular parallelopiped, has an opening over the entire top face while a connecting portion 30a connectable with a funnel-like receiving port 31a provided at one end of the first water supply pipe 31 is provided at a lower portion of one end face. The cover portion 96 serves to cover the opening of the entire top face in the tank body 95, and is provided with a water receiving section 97. The water receiving section 97 is formed of a recess for temporary reception of water supplied by the bypass pipe 92 and provided on the same side as the connecting portion 30a of the tank body 95. Further, the recess forming the water receiving section 97 is to be covered with a cover member 98. Then, the cover member 98 is provided with a circular-shaped water supply port 99 to which the other end of the bypass pipe 92 is to be inserted or connected. In addition, Fig. 6D is a longitudinal sectional view passing through a center of the water supply port 99.

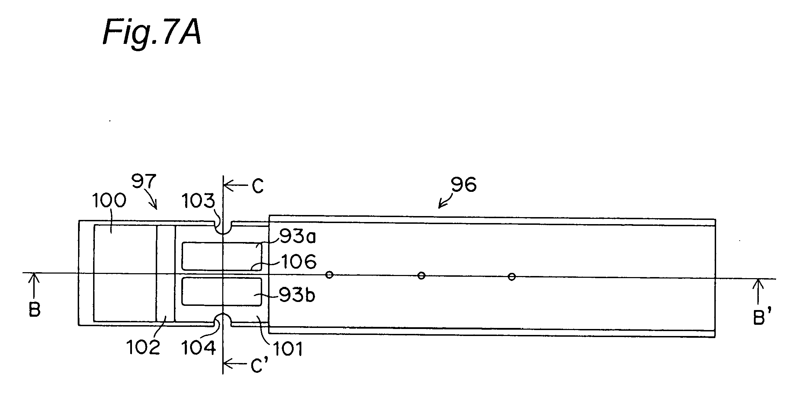

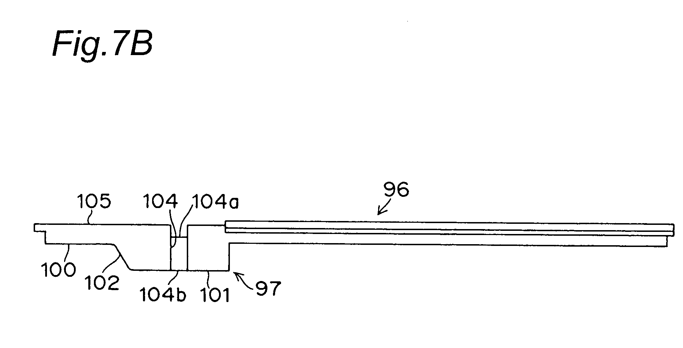

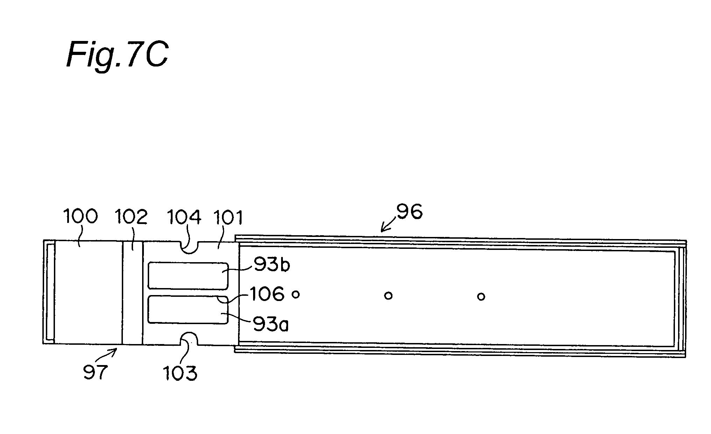

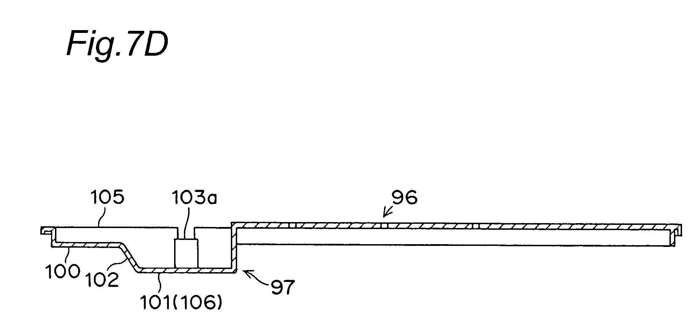

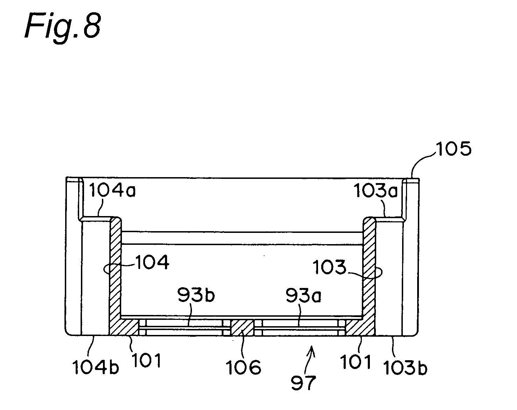

Figs. 7A through 7D are trihedral figures and a longitudinal sectional view of the cover portion 96 in a state that the cover member 98 has been removed. Fig. 7A is a plan view, Fig. 7B is a front view and Fig. 7C is a bottom view. Fig. 7D is a sectional view taken along the line B - B' of Fig. 7A. In addition, Fig. 8 is an enlarged sectional view taken along the line C - C' of Fig. 7A.

With reference to Figs. 7A through 7D and Fig. 8, the water receiving section 97 has an upper stage portion 100 which is located below the water supply port 99 and which is shallow in depth, a lower stage portion 101 which is deeper than the upper stage portion 100, and a sloped portion 102 adjoining the upper stage portion 100 and the lower stage portion 101. Then, on both sides of the lower stage portion 101 with the center axis of the cover member 98 interposed therebetween, mesh-like filters 93a, 93b are formed in rectangular two openings. These filters 93a, 93b are formed by weaving nylon or other long fiber longitudinally and laterally.

Also, at positions in both side walls of the water receiving section 97 corresponding to the locations of the filters 93a, 93b are formed two overflow drain channels 103, 104 which extend vertically and each of which is formed of a channel having a semicircular cross section with its upper end 103a, 104a positioned slightly upward of the upper stage portion 100. The upper ends 103a, 104a communicate with the water receiving section 97 while the lower ends 103b, 104b communicate with the tank body 95. Thus, by the formation of the overflow drain channels 103, 104 on both side walls of the water receiving section 97, water that tends to overflow the water receiving section 97 due to clogging of the filters 93a, 93b is allowed to pass through between the overflow drain channels 103, 104, whose upper ends 103a, 104a are positioned lower than an upper edge 105 of the water receiving section 97, and the two side walls of the tank body 95 so as to flow into the tank body 95. Accordingly, the water that has overflowed the water receiving section 97 can be prevented from flowing outside the water tank 30.

In this connection, in the case where the filter 93 is provided as one sheet ranging over the entire lower stage portion 101, when water is supplied to the dry filter 93 through the water supply port 99, the water cannot pass through the filter 93 because of the surface tension of the water, and becomes passable through the filter 93 when water has been accumulated on the filter 93 to such a certain quantity as to exert sufficient water pressure. In this case, if the filter 93 is formed along the end wall surface of the water receiving section 97 on the water supply port 99 side, the surface tension would lower due to the contact of the water with the end wall surface, allowing the water to pass through the filter 93 along the end wall surface. However, in such a case, the lower stage portion 101, in which the filter 93 is provided, would be positioned at an end portion of the tank body 95, so that the water in the tank body 95 would wave largely due to swing of the water tank 30 caused by the user when taking it out, the wave flying out from the lower stage portion 101 of the water receiving section 97 through the water supply port 99 to splash on the user.

Accordingly, in this embodiment, at a center of the one-sheet filter 93, a rib 106 extending in the longitudinal direction of the tank body 95 is formed so that the filter 93 is separated into a filter 93a and a filter 93b by the rib 106. This rib 106 is formed between the two openings in the lower stage portion 101 so as to protrude upper and lower than the filters 93a, 93b as can be seen from Fig. 8. By the provision of the rib 106 at least lower than the filters 93a, 93b in contact with those filters 93a, 93b, even if the filters 93a, 93b are in a dry state, the water surface tension lowers by virtue of the member along which water is conducted on the lower side of the filters 93a, 93b, thus allowing the water to pass through the filters 93a, 93b promptly along the rib 106.

In this connection, the filters 93a, 93b, which are formed by weaving long fiber such as nylon longitudinally and laterally as described above, are integrally molded between the rib 106 and the lower stage portion 101 when the water receiving section 97 is formed from resin. As a result, as shown in Fig. 8, the filters 93a, 93b are sandwiched from upper and lower two sides by the rib 106 and the lower stage portion 101, so that the filters 93a, 93b are reinforced by the rib 106 and the lower stage portion 101 so as to be strong and less liable to breakage.

Further, the vertical position of the filters 93a, 93b is set at the position of the lower stage portion 101, which adjoins the upper stage portion 100 via the sloped portion 102, so that the filters 93a, 93b are wetted when the user has put water into the tank body 95 to a fullness sign. Therefore, when the tank body 95 is in a water-full state, water supplied from the water supply port 99 is allowed to promptly pass through the filters 93a, 93b.

Further, the filters 93a, 93b are provided in the lower stage portion 101 that adjoins via the sloped portion 102 to the upper stage portion 100 that is located beneath the water supply port 99. Therefore, the water supplied from the water supply port 99 has a dynamic pressure generated by its flowing down from the upper stage portion 100 toward the lower stage portion 101 along the sloped portion 102, the dynamic pressure being applied to the filters 93a, 93b so that the dry filters 93a, 93b become easily wettable. Thus, the water supplied from the water supply port 99 can be passed through the filters 93a, 93b more promptly.

The water receiving section 97 has the upper stage portion 100, which is positioned beneath the water supply port 99 and shallow in depth, and the lower stage portion 101, in which the filters 93a, 93b are formed and which is deep in depth, in which arrangement the water supply port 99 and the upper stage portion 100 are positioned on one side closer to the wall surface of the tank body 95 while the lower stage portion 101 is positioned closer to the center than the upper stage portion 100. Accordingly, when the user takes out the water tank 30, the water in the tank body 95 wavers to give rise to a large wave, the wave tending to fly out from the lower stage portion 101 but being blocked by the step gap between the lower stage portion 101 and the upper stage portion 100. Thus, the water can be prevented from flying out through the water supply port 99 and splashing on the user. Further, since the water supply port 99 is positioned on one side closer to the wall surface of the tank body 95, the length of the bypass pipe 92 ranging from the drain valve 70 to the water supply port 99 can be shortened as compared with the case where the water supply port 99 is positioned at a central portion of the tank body 95.

As described above, in this embodiment, the cover portion 96 for covering the opening of the tank body 95 is provided with the water receiving section 97 formed of a recess that serves for temporary reception of water supplied by the bypass pipe 92, and the water receiving section 97 is provided with the mesh-like filters 93a, 93b. Therefore, scale or other impurities contained in the water in the pot 41 and discharged from the drain valve 70 can be filtrated by the filters 93a, 93b, so that discharged water from the pot 41 can be recycled as water for steam generation without using any special purification system.

That is, according to this embodiment, the number of times of water supply to the water tank 30 can be reduced without using any special purification system. Also, fails to drain of the drain tank that receives the water drain from the pot 41 can be prevented as well.

Moreover, in water supply to the water tank 30, removing the cover portion 96 that covers the opening of the entire top face of the tank body 95 allows the water to be poured into the tank body 95 with good workability.

In the foregoing embodiment, the water receiving section 97 in the cover portion 96 that closes the opening in an upper portion of the tank body 95 is so formed as to be covered with the removable cover member 98 having the water supply port 99. However, the cover member 98 may also be provided so as to be slidable. Moreover, the cover member 98 is not necessarily needed and may be omitted.

Also in the embodiment, the rib 106 is formed between the two openings in the lower stage portion 101. That is, the rib 106 is formed by part of the lower stage portion 101. However, the rib 106 may also be provided separate from the water receiving section 97. As an example, a rib-containing filter frame divided into two spaces by the rib may also be formed, and the filter frame having filters 93a, 93b fitted to the two spaces may be mounted at the lower stage portion 101 of the water receiving section 97. Alternatively, a one-sheet filter 93 may be fitted to one opening provided in the lower stage portion 101, and a rib member may be fitted and stretched to the lower stage portion 101 so as to divide the opening, to which the filter 93 is fitted, into two parts, with the rib member in close contact with the lower face of the filter 93.

Furthermore, the embodiment has been described on a case of the heating cooker 1, as an example, in which the steam temperature-raising device 50 is included so that the object to be cooked 90 is heated by superheated steam from the steam temperature-raising device 50. However, needless to say, the present invention is also applicable to heating cookers in which the object to be cooked is heated only by non-superheated steam from the steam generator 40 without including the steam temperature-raising device 50.

## Claims

1. A heating cooker, comprising:
a steam generator (40) for generating steam;
a heating chamber (20) for heating an object to be heated (90) by steam supplied from the steam generator (40);
a water tank (30) for storing water which is to be supplied to the steam generator (40) to generate steam,
the steam generator (40) including a pot (41) to which water is supplied, and a heater (42) placed within the pot (41),
the water tank (30) including a tank body (95) having an opening in its top face, and a cover portion (96) removably provided in the tank body (95) to cover the opening of the tank body (95); and
a discharge pipe (92) for discharging water in the pot (41) to the water tank (30), wherein
the cover portion (96) includes a recess (100, 101) to which water derived from the discharge pipe (92) is supplied, and a filter (93a, 93b) provided at the recess (100, 101) for removing impurities of the water derived from the discharge pipe (92).

2. The heating cooker as claimed in Claim 1, wherein
the cover portion (96) further includes another cover (98) which is provided so as to be fittable to and removable from the recess (100, 101) to cover the recess (100, 101) and which has a water supply port (99) to which water derived from the discharge pipe (92) is to be supplied.

3. The heating cooker as claimed in Claim 1, wherein
the filter (93a, 93b) is provided at a bottom face in the recess (100, 101) of the cover portion (96).

4. The heating cooker as claimed in Claim 1, wherein the filter (93a, 93b) is provided with a rib (106) in contact with at least the bottom face of the filter (93a, 93b).

5. The heating cooker as claimed in Claim 4, wherein
the filter (93a, 93b) is integrally molded with the rib (106).

6. The heating cooker as claimed in Claim 2, wherein the recess (100, 101) includes a first recess (101) at which the filter (93a, 93b) is to be provided, and a second recess (100) shallower than the first recess (101), and
the water supply port (99) is provided at a position confronting the second recess (100).

7. The heating cooker as claimed in Claim 6, wherein the recess (100, 101) includes a sloped portion (102) adjoining the first recess (101) and the second recess (100).

8. The heating cooker as claimed in Claim 6, wherein
the first recess (101) is placed closer to a center of the cover portion (96) than the second recess (100).
